# EUROPÄISCHE PATENTSCHRIFT

(11) **EP 2 627 597 B1**
(45) Veröffentlichungstag und Bekanntmachung des Hinweises auf die Patenterteilung: **25.02.2015**
(21) Anmeldenummer: 11749847.7
(22) Anmeldetag: 01.09.2011
(51) Int. Cl.: B66B 9/193

(54) **SCHIENENTRANSPORTSYSTEM FÜR DIE BELADUNG UND ENTLADUNG DER KOMBÜSE EINES FLUGZEUGS**
RAIL TRANSPORT SYSTEM FOR LOADING AND UNLOADING THE GALLEY OF AN AEROPLANE
SYSTÈME DE TRANSPORT SUR RAILS CONÇU POUR LE CHARGEMENT ET LE DÉCHARGEMENT DU BLOC CUISINE D'UN AVION

(30) Priorität: 13.10.2010 DE 102010048194; 08.08.2011 DE 102011052497
(43) Veröffentlichungstag der Anmeldung: 21.08.2013
(73) Patentinhaber: Friedrich, Detlef Henry, 60318 Frankfurt am Main (DE)
(72) Erfinder: Friedrich, Detlef Henry, 60318 Frankfurt am Main (DE)
(74) Vertreter: Meyer-Dulheuer, Karl-Hermann
(86) Internationale Anmeldenummer: PCT/EP2011/065083
(87) Internationale Veröffentlichungsnummer: WO 2012/048944

(56) Entgegenhaltungen:
- EP-A1- 0 018 486
- EP-A1- 0 291 678
- EP-A2- 1 642 827
- CA-A1- 2 274 447
- DE-A1- 19 614 042
- DE-A1-102005 057 326
- GB-A- 1 524 390

## Beschreibung

Beim erfindungsgemäßen Gegenstand handelt es sich um ein Schienentransportsystem, insbesondere ein Schienentransportsystem für die Beladung und Entladung der Kombüse eines Flugzeuges.

Flugzeuge werden entweder nach der Ankunft am Flughafen entladen oder vor dem Abflug beladen. Lkws oder Hubwagen werden eingesetzt, um diese Prozesse durchzuführen. In der Fahrwerkkonstruktion unter dem Lkw oder Hubwagenkoffer ist eine Hydraulik mit einem Scherensystem eingebaut. Der Lkw oder Hubwagen ist mit einer hydraulischen Funktion und einer Scherenkonstruktion ausgestattet und kann den gesamten Lkw/Hubwagenkoffer mitsamt seiner Ladung bis zur entsprechenden Tür des Flugzeugs nach oben heben oder absenken.

Moderne Flugzeuge, wie z.B. Boeing 747, 757, 787 und Airbus A 340-600, A380, sind mit mehrstöckigen Kabinen versehen, einschließlich einer Frachtkabine und einer Passagierkabine. Die Frachtkabine weist eine Frachtladeluke auf, die durch eine Frachttür am Flugzeugrumpf geöffnet und geschlossen wird. Die Passagierkabine befindet sich direkt über oder unter der Frachtkabine, wobei eine Kombüse (Galley) in der Passagierkabine vorhanden ist. Zum Fördern eines Frachtgutstücks, das über die Frachtladeluke in die Frachtkabine bewegt wurde, zur Passagierkabine und zum Zurückbefördern des geförderten Fracht-gutstücks von der Passagierkabine zur Frachtkabine ist ein Aufzug im Flugzeug vorgesehen. Der Aufzug transportiert mehrere Wagen bzw. Trolleys, die von den Lkws oder Hubwagen beladen werden, von der Frachtkabine zu der Kombüse der Passagierkabine, um die Bordküche zu beladen. Die leeren Wagen werden dann wieder durch den Aufzug von der Bordküche zur Frachtkabine und dann zum Lkw oder Hubwagen transportiert. Die Wagen werden auf diese Weise zwischen der Außenseite des Flugzeugs und der Passagierkabine bewegt.

Eine beladene Kombüse enthält sämtliche Waren, die die Stewards und die Fluggäste für die Strecke des Fluges brauchen werden oder könnten. Es geht nicht nur um das Essen, sondern auch um alle möglichen Waren, wie z.B. Windeln, Sicherheitseinrichtungen usw. Wenn der Aufzug zum Transportieren der Wagen ausgefallen Ist, können die Wagen nicht zwischen den zwei Kabinen bewegt werden. Die Beladung der Kombüse in der Passagierkabine ist somit nicht mehr möglich. Das Flugzeug darf nicht abfliegen, bevor der Aufzug repariert worden ist; die Boardingzeit wird verlängert. Wenn der Abflug auf den nächsten Tag verschoben wird, müssen die Fluggäste im Hotel untergebracht werden, was einen verringerten Umsatz für eine Fluggesellschaft bedeutet. Außerdem besteht die Gefahr des Verlusts der Kundenzufriedenheit bei häufigem unpünktlichem Ab- und Anflug der Flugzeuge.

Aus der deutschen Patentanmeldung DE 196 140 42 A1 ist ein Schrägaufzug bekannt, der aus mit Gelenken verbundenen, zusammenfaltbaren Schwenksegmenten besteht und parallele Führungsschienenpaare für den Transport von Lasten aufwärts und abwärts aufweist, die mittels einer Seilwinde herauf- und herabgleiten können.

Aus der Patentanmeldung GB 1524390 A ist eine Karre bekannt, die mit einem Paar Vorderrädern und Schlittenelementen sowie einer motorgetriebenen Riemenraupe ausgestattet ist und mehrere Stufen einer Treppe hochsteigen kann.

Der Erfindung liegt nunmehr die Aufgabe zugrunde, eine Lösung für einen Aufzug zum Be- und Entladen der Kombüse zur Verfügung zu stellen, die für alle Flugzeugmuster einsetzbar ist.

Diese Aufgabe wird erfindungsgemäß gelöst durch ein Schienentransportsystem umfassend mindestens die folgenden Komponenten:
- zwei Formprofil-Laufschienen (20), die auf einer Treppe oder auf einer ebenen Strecke ausgefahren werden, wobei die Formprofil-Laufschienen jeweils mehrere faltbare Schienenkassetten oder teleskopierbare Schienenabschnitte aufweisen und die zwei Formprofil-Laufschienen (20) mindestens einen Elektromotor (57) aufweisen,
- eine Transportschiene (61), die mindestens einen weiteren Elektromotor und mehrere faltbare Schienenkassetten (25) oder teleskopierbare Schienenabschnitte aufweist, und
- einen Transportwagen (2), der auf der Transportschiene (61) bewegt wird und in dem die Formprofil-Laufschienen (20) und die Transportschiene (61) eingelagert sind, wobei der Transportwagen (2) mit mindestens einem weiteren Elektromotor versehen ist.

Die Formprofil-Laufschienen gemäß der vorliegenden Erfindung sind bevorzugt U-förmige Laufschienen.

Das Schienentransportsystem kann an einer Treppe im Flugzeug eingebaut oder als mobiler Aufzugersatz bei allen Flugzeugtypen für sämtliche Transporte von unten nach oben oder oben nach unten in einer Flugzeugkabine, jedweder Treppenform verwendet werden, wobei das Treppengelände mitverwendet wird.

Dies Schienentransportsystem ist besonders für den Transport eines oder mehrerer Behältnisse für das Be- und/oder Entladen der Kombüse eines Flugzeuges geeignet.

Der Transportwagen dient vor und nach dem Einsatz als Stauraum für die Transportschiene. Er wird wie ein Trolley in einem freien Staufach der Kombüse abgestellt und kann bei einem Totalausfall des Aufzuges für das Be- und/oder Entladen der Kombüse eingesetzt werden.

Die verschiedenen Fluggesellschaften haben verschiedene Behältnistypen, die unterschiedliche Maße, Größe und Bezeichnungen aufweisen. Ein langer Trolley weist eine Breite von 41 cm, eine Höhe von 105 cm und eine Länge von 92 cm auf. Ein halber Trolley weist eine Breite von 41 cm, eine Höhe von 105 cm und eine Länge von 45 cm auf. Ein Behälter weist eine Breite von 41 cm, eine Höhe von 105 cm und eine Länge von 45 cm auf. Der Transportwagen lässt sich auf beiden Seiten zusammen maximal um 2,5 cm auf die Breite eines Trolleys entweder verbreitern oder verkleinern. Dadurch entsteht die Möglichkeit, den Transportwagen mit eingelagerter Transportschiene bordgebunden mitzuführen.

Bei der Treppe zwischen zwei Flugzeugetagen handelt es sich beim Flugzeugtyp Boeing 747-400 um eine gerade Treppe und die Kombüse befindet sich in der oberen Etage. Bei der Treppe zwischen zwei Flugzeugetagen handelt es sich beim Flugzeugtyp Airbus A 380 um eine Wendeltreppe und die Kombüse befindet sich in der oberen Etage. Bei der Treppe zwischen zwei Flugzeugeta-gen handelt sich beim Flugzeugtyp Airbus A 340-00 um eine gerade Treppe und die Kombüse befindet sich in der unteren Etage.

Vorzugsweise können seitlich an den Schienenkassetten oder den Schienenabschnitten der Transportschiene Verbindungsschienen angebracht sein, die die Faltung und Entfaltung der Schienenkassetten oder den Einzug und Auszug der Schienenabschnitte unterstützen.

Bei einer aus mehreren Schienenkassetten bestehenden faltbaren Transportschiene sind jeweils zwei benachbarte Schienenabschnitte vorzugsweise mittels eines Drehgelenks miteinander verbunden, wodurch die Transportschiene zusammengeklappt werden kann. Bei einer aus mehreren Schienenabschnitten bestehenden teleskopierbaren Transportschiene weist die Transportschiene vorzugsweise eine Teleskopvorrichtung auf, die mit dem Elektromotor betrieben wird. Die Schienenabschnitte sind teleskopierbar miteinander verbunden und die Teleskopvorrichtung kann die Transportschienen mittels Zahnradtechnik Abschnitt für Abschnitt aus dem Transportwagen schieben.

Das erfindungsgemäße Schienentransportsystem kann auch bei der Vorlaufbeladung und Rücklaufentladung der Lkw-Hubwagenkoffer eingesetzt werden. Die Behältnisse werden bei der Vorlaufbeladung in den Transportwagen geschoben ("Cart-In-Cart" System). Über die Transportschiene gelangt der Transportwagen in den Lkw-Hubwagen. Die Vorlaufbeladung kann mit dem Schienensystem direkt aus Produktions-, Kommissionier- und Bereitstellungsbereichen in den Lkw-Hubwagenkoffer geladen werden. Die Behältnisse werden im Lkw-Hubwagen aufgestellt und die Feststellbremsen der Behältnisse werden gesichert. Bei der Rücklaufentladung werden die Behältnisse in den Transportwagen geschoben. Die Transportschiene transportiert den Transportwagen in den Bereich der Rücklauframpe. An der Rücklauframpe werden die Behältnisse entnommen, sortiert und für weitere Prozesse bereitgestellt.

Das vorliegende Schienentransportsystem kann auch die Behältnisse durch die Passagiergänge transportieren. Bei einigen Fluggesellschaften ist es wegen der Gefahr der Sitzbeschädigung nicht erlaubt, die Behältnisse durch Passagiergänge zu schieben. Mit dem erfindungsgemäßen Schienentransportsystem ist ein sicherer Transport zur Kombüse ohne Beschädigung der Sitze gewährleistet.

Bei einer aus mehreren Schienenkassetten bestehenden faltbaren FormprofilLaufschiene sind jeweils zwei benachbarte Schienenabschnitte vorzugsweise ebenfalls mittels eines Drehgelenks miteinander verbunden, wodurch die Formprofil-Laufschiene zusammengeklappt werden kann. Bei einer aus mehreren Schienenabschnitten bestehenden teleskopierbaren Formprofil-Laufschiene weist die Laufschiene vorzugsweise auch eine Teleskopvorrichtung auf, die mit dem Elektromotor betrieben wird. Die Schienenabschnitte sind teleskopierbar miteinander verbunden und die Teleskopvorrichtung kann die Laufschiene mittels Zahnradtechnik Abschnitt für Abschnitt aus dem Transportwagen schieben.

Der Transportwagen ist zusätzlich mit einem Stromkabel und einem Stecker versehen, die an eine Steckdose im Flugzeug angeschlossen werden können, wobei das Stromkabel mit dem Stecker in einer stolperfreien Schiene untergebracht ist. In jedem Flugzeug hat der Stromanschluss 115V. Mit einer Taste am Transportwagen werden die Elektromotoren des Transportwagens, der Formprofil-Laufschienen und der Transportschiene gestartet.

Der Elektromotor im Transportwagen sowie der Elektromotor in der Transportschiene kann bei einem Stromausfall oder Fehlen einer geeigneten Stromquelle im Flugzeug jeweils mit einem Akku betrieben werden. Der Akku kann über die Lichtmaschine am Lkw/Hubwagen oder über die Stromversorgung an Bord während des Einsatzes aufgeladen werden.

Wenn die Transportschiene auf einer Treppe anzubringen ist, wird der Transportwagen an die unterste Treppenstufe gefahren. Der Transportwagen weist einen Fußhebel auf, womit die Feststellbremse der Räder des Transportwagens betätigt werden kann.

Nachdem der Transportwagen positioniert ist und die Elektromotoren gestartet sind, werden die Formprofil-Laufschienen auf die Treppen ausgefahren. An der Unterseite der zwei Laufschienen befindet sich jeweils eine Zahnschiene, unter der sich Zahnräder drehen. Die Zahnräder sind im Transportwagen angebracht, werden vom Elektromotor angetrieben und sind mit einem Zahnriemen verbunden, Die einzelnen faltbaren Schienenkassetten bzw. teleskopierbaren Schienenabschnitte werden mittels der Zahnräder unter den Zahnschienen, die an der Unterseite der Schienenkassetten bzw. Schienenabschnitte angebracht sind, im Transportwagen bewegt. Die beiden Formprofil-Laufschienen werden in einem größeren Winkel als dem Steigungswinkel der Treppe auf der Treppenkante nach oben bewegt und können sich am Ende des Aufbauprozesses auf die Treppe legen. Zwischen den zwei Formprofil-Laufschienen sind mehrere Verbindungsstäbe vorgesehen, damit sich die Formprofil-Laufschienen parallel zu den Treppenseitenkanten legen und zusätzlich eine Stabilität für die Transportschiene bieten. Die Verbindungsstäbe sind jeweils in der Mitte mit mindestens einem L-förmigen Winkel versehen, der sich beim Aufbau der Laufbahnen an die Treppenkanten legt.

An den Formprofil-förmigen Laufbahnen sind vorzugsweise mehrere Treppenseiten-Abstandshalter angebracht.

Die Transportschiene liegt über der Formprofil-Laufschiene. Der Transportwagen bewegt sich auf der Transportschiene. An der Unterseite der Transportschiene sind u.a. mehrere Laufwalzen angebracht, die sich in den Formprofil-Laufschienen bei dem Aufbau der Transportschiene bewegen.

Die einzelnen faltbaren Schienenkassetten bzw. teleskopierbaren Schienenabschnitte werden mittels der Zahnräder unter den Zahnschienen, die an der Unterseite der Schienenkassetten bzw. Schienenabschnitte angebracht sind, im Transportwagen bewegt.

Es ist von Vorteil, wenn die Transportschiene zusätzlich mit Metallfedern, Luftfedern oder Gasfedern an der Unterkante der Kassetten bzw. Abschnitte versehen ist, die ein langsames Absenken der Transportschiene auf die Treppenkanten unterstützen.

An der obersten Schienenkassette oder dem obersten Schienenabschnitt ist eine Klappe mit Rampenfunktion für das Be- und Entladen der Behältnisse mit einem Scharnier befestigt. Die unterste Schienenkassette oder der unterste Schienenabschnitt ist mit einer Querstange versehen, damit gleichzeitig ein Hebelmechanismus ausgelöst wird, wenn die Federbeine, die ein Verrutschen auf den mit Teppich ausgelegten Stufen verhindern und für eine zusätzliche Standfestigkeit für die Transportschiene sorgen, auf die Stufen aufsetzen. Vorzugsweise ist die Transportschiene an beiden Enden jeweils mit einem oder mehreren Befestigungsmitteln zur Befestigung der Schiene auf dem oberen Treppenabsatz und dem unteren Treppenabsatz versehen.

Die Transportschiene des erfindungsgemäßen Schienentransportsystems ist mit einem integrierten Gleitschlitten versehen. Der integrierte Gleitschlitten ist aus Leichtmetall, wie z.B. Aluminium, hergestellt und bewegt sich auf der Transportschiene. Der Gleitschlitten weist mindestens eine Gleitplatte und eine Transportplatte auf. Die Gleitplatte und die Transportplatte sind mit einem Scharnier verbunden und lassen sich zusammenklappen. Unter der Gleitplatte sitzen mehrere Laufwalzen, die ein reibungsarmes Hin- und Hergleiten in der Transportschiene sichern. Beim Beenden des gesamten Be- und/oder Entladeprozesses bewegt sich der Gleitschlitten automatisch an den oberen Teil der Transportschiene.

Die Transportplatte transportiert den Transportwagen ("Cart-In-Cart" System) und kann mindestens 150 kg Gewicht transportieren. Die Transportplatte wird in einem größeren Winkel als 90° zur Be- und Entladeebene bewegt. Links und rechts der Transportplatte sind Sicherungschienen angebracht, die den jeweiligen größeren Winkel als 90° beim Ausklappen der zwei Gleitplatten festlegen. Die Transportplatte wird in einen Schlitz unten im Transportwagen geschoben wird. An der Transportplatte sind mehrere T-Stifte angebracht, die sich mit der Verriegelungstechnik im Transportwagen verschließen lassen und damit eine sichere Befestigung des Transportwagens mit Behältnissen erreichen.

Vorzugsweise bestehen mehrere Ebenen in den Schienenkässetten oder Schienenabschnitten, die mit Abtrennungen aus leichten Kunststoffplatten versehen sind, wobei in den Ebenen der Schienenkassetten oder Schienenabschnitte eine Zahnradtechnik, ein oder mehrere Zahnriemen und ein oder mehrere Flachmotoren oder Röhrenmotoren untergebracht sind, und wobei in den verschiedenen Ebenen Vierkant-Leichtmetallverstebungen oder Rundstabverstrebungen eingebaut sind.

Der Transportwagen kann ein Minimalgewicht der Behältnisse von 150 kg und ein Maximalgewicht von 200 kg transportieren. Ein Vorteil des erfindungsgemäßen Schienentransportsystems ist, dass das Bruttogewicht des Transportwagen und der Behältnisse sich auf der Transportschiene verteilt.

Die Breite der Transportschiene ist kleiner als die Breite des Transportwagens mit Unterbau.

Der Transportwagen des Schienentransportsystems ist mit einem Laufhebel versehen, der den Transportwagen auf die Breite eines Standardtrolleys verkleinern oder vergrößern kann. Der Laufhebel bewegt ein Gestänge und bewegt gleichzeitig beide Seiten des Transportwagens um zusammen maximal 2,5 cm nach innen oder außen. Der Laufhebel mit manueller Bedienung, der das Gestänge für die Verbreiterung oder Verkleinerung des Transportwagens bedient, kann entweder durch einen Elektromotor mittels Zahnrädern und Zahnriemen oder auch anderen mechanischen Einrichtungen, wie Spindeltechnik, ersetzt werden.

Ein Führungsseil wird über ein Zahnrad von dem Laufhebel bewegt. Das Führungsseil läuft zunächst zwischen der Seitenaußenwand und der Seiteninnenwand des Transportwagens und wird durch zwei Seilführungsräder umgelenkt und zu dem Verbreiterungsgestänge geführt. Das Verbreiterungsgestänge umfasst eine Längsmetallstange und mehrere Quergelenke. Die Quergelenke sind an der Längsmetallstange und an der Seitenwand des Transportwagens befestigt und verbreitern oder verkleinern den Transportwagen.

Es verbindet sich der Transportwagen mittels des am Boden des Transportwagens befindlichen Hakenmechanismus mit der am Ende der Transportschiene befindlichen Querstange. An den Innenseiten des Transportwagens befinden sich Führungslaufschienen, während an der Außenseite des Transportwagens sich Laufräder befinden. Nach diesem mechanischen Verbindungsvorgang wird der Elektromotor im Transportwagen eingeschaltet, der an einer Metallseilwinde oder mittels eines Zahnriemens und Zahnrädern die Transportschiene Teil für Teil in den Transportwagen einzieht.

Der Transportwagen weist vorzugsweise mehrere Profil-Schienen, vorzugsweise U-förmige Profilschienen, zum Einschieben der Seitenwände auf. Die Seitenwand des Transportwagens ist vorzugsweise mit Kunststoff beschichtet und wird in die Profil-Schiene eingebracht. Es ist vorteilhaft, dass am Rand der Seitenwand eine Seitensegelkammer vorgesehen ist. In der Seitensegelkammer des Transportwagens ist ein Seitensegel in einer Signalfarbe eingebaut, das sich auf einer Laufschiene beim Aufbau der Formprofil-Laufschiene mit ausbaut und den begehbaren Teil der Treppe neben der Laufschiene wegen Unfallgefahr anzeigt. Wenn die Transportschienen Abschnitt für Abschnitt bzw. Kassette für Kassette geschoben wird, ziehen sich gleichzeitig mit dem ersten Teil der Transportschiene eine Seitenbegrenzung und ein Seitensegel aus Kunststoff aus einer Seite des Transportwagens in Signalfarbe in einer Schiene mit nach oben bis zur obersten Stufenkante. Diese Seitenbegrenzung und das Seitensegel mit Signalfarbe zeigen wegen Unfallgefahr die aktuelle Breite der Stufe an, falls der freie Teil der Treppenstufen von weiteren Mitarbeitern genutzt werden sollte, und verhindert das Stolpern und das Betreten der Transportschiene und einen Sturz auf der Treppe.

Die Seitenwand ist zusätzlich mit einer Spindel, die in einem Spindelrohr eingebracht ist, versehen. Eine Seilführung ist in einem Seilschacht der Seitenwand eingebracht

Es ist bevorzugt, dass sich im Boden des Transportwagens mehrere Ebenen mit Abtrennungen befinden. In der obersten Ebene ist eine Tragplatte für Behältnisse wie z. B. Trolleys vorgesehen. Die Tragplatte weist zwei Führungsschienen für die Zwillingsräder der Trolleys auf. Die Führungsschienen dienen als Arretierungen der Trolleys mit Rädern und verhindern eine übermäßige Bewegung der Trolleys während des Transports im Transportwagen. In der untersten Ebene befindet sich eine Verriegelungstechnik für den Transportwagen und die Transportplatte eines Gleitschlittens. Die Ebenen sind mit Abschlussdecke zur nächte Ebene mit Funktionstechnik eingebaut.

Vorzugsweise befindet sich links und rechts des Transportwagens jeweils ein Spindelrohr mit eingebauten Spindeln, wobei am unteren Teil der Spindeln die Räder des Transportwagens mit Kugellagern angebracht und die Spindelrohre an den Seiten des Transportwagens mit einer Querstange verbunden sind.

Es ist von Vorteil, wenn der Transportwagen über eine Kurbelantriebsmöglichkeit verfügt.

Die vorliegende Erfindung betrifft auch ein Verfahren zum Transport eines oder mehrerer Behältnisse für das Be- und/oder Entladen der Kombüse eines Flugzeuges. Das Verfahren umfasst mindestens die folgenden Schritte:
- Anfahren und Positionieren eines Transportwagens, in dem zwei Form-profil-förmigen Laufschienen und eine Transportschiene eingelagert sind, an die unterste Treppenstufe einer Treppe, wobei der Transportwagen mit mindestens einem Elektromotor versehen ist, wobei die Formprofil-Laufschienen jeweils mehrere faltbare Schienenkassetten oder teleskopierbare Formprofil-Schienenabschnitte aufweisen und wobei die Transportschiene mindestens einen Elektromotor und mehrere faltbare Schienenkassetten oder teleskopierbare Schienenabschnitte aufweist,
- Auslegen der zwei Formprofil-förmigen Laufschienen auf der Treppe, wobei die Formprofil-förmigen Laufschienen in einem größeren Winkel, als dem Steigungswinkel der Treppe, auf die Treppenkante nach oben bewegt werden und sich am Ende des Aufbauprozesses auf die Treppe legen,
- Auslegen der Transportschiene auf der Formprofil-förmigen Laufschiene, wobei sich die Laufwalzen, die an der Unterseite der Transportschiene angebracht sind, in den Formprofil-Laufschienen bewegen,
- Transportieren des Behältnisses bzw. der Behältnisse, die im Transportwagen beladen sind, mittels eines Gleitschlittens, der mindestens eine Gleitplatte und eine Transportplatte besitzt, wobei die Gleitplatte und die Transportplatte mit einem Scharnier verbunden sind und sich zusammenklappen lassen, wobei die Transportplatte in einen Schlitz unten im Transportwagen geschoben und befestigt wird und wobei unter der Gleitplatte mehrere Laufwalzen sitzen, die ein reibungsarmes Hin- und Hergleiten in der Transportschiene sichern.

Bei jedem LKW-Hubwagenkoffer kann das Schienentransportsystem und die Transportschiene als Nachrüstung eingebaut werden. Erfindungsgemäß werden damit alle Be- und Entladeprozesse mittels des Schienentransportsystems und der Transportschiene für die Beladung und Entladung im LKW-Hubwagenkoffer übernommen.

Mehrere Transportwagen, die mit mehreren Behältnissen beladen sind, werden in dem LKW-Hubwagenkoffer angeordnet. Mehrere Formprofil-Laufschienen sowie zusätzliche Transportschienen werden installiert, wodurch zwei Schienentransportsysteme zum Beladen bzw. Entladen eines Flugzeugs und zwei Schienentransportsysteme zum Beladen oder Entladen des LKW- Hubwagenkoffers aufgebaut werden und zwei Schienentransportsysteme eine Beladung bzw. Entladung von einem LKW- Hubwagenkoffer in einen zweiten LKW- Hubwagenkoffer wechselt. Die Transportwagen werden auf das Schienentransportsystem zum Beladen des Flugzeugs über eine Weiche für das Beladen des Flugzeugs heraufgefahren. Die Transportwagen werden von dem Schienentransportsystem zum Entladen des Flugzeugs vorzugsweise über eine Weiche für das Entladen des Flugzeugs heruntergefahren, wobei das Einladen der beladenen Behältnisse und das Ausladen der leeren Behältnisse gleichzeitig durchgeführt werden können. Vorzugsweise werden mehrere Schienentransportsysteme innerhalb des Lkw-Hubwagenkoffers aufgebaut, mit deren Hilfe die Transportwagen innerhalb des Lkws-Hubwagenkoffers transportiert werden können.

Die vorliegende Erfindung betrifft auch ein System zum Be- und Entladen des Lkw-Hubwagenkoffers sowie zum gleichzeitigen Be- und/oder Entladen der Kombüse eines Flugzeuges, wobei das System mindestens die folgenden Komponenten aufweist:
- einen Lkw mit Hubwagenkoffer, in dem mehrere Transportwagen vorhanden sind, wobei die Transportwagen jeweils mit Behältnissen beladen sind,
- zwei Schienentransportsysteme mit Transportschienen zwischen dem LKW- Hubwagenkoffer und der Flugzeugkabine, wobei die zwei Schienentransportsysteme jeweils aus Formprofil-Laufschienen und einer Transportschiene bestehen und wobei jedes Schienentransportsystem mit einer Weiche für das Herauffahren und das Herunterfahren der Transportwagen versehen ist,
- mehrere Schienentransportsysteme innerhalb des LKW- Hubwagenkoffers zum Transport innerhalb des LKW- Hubwagenkoffers.

Es soll betont werden, dass die wichtigen Vorteile der vorliegenden Erfindung darin liegen, dass die Arbeitsbedingungen der Mitarbeiter bei der Be- und Entladung der LKW-Hubwagen oder bei den Prozessen der Be- und Entladung am Flugzeug dadurch verbessert werden, dass maximal 4500 kg nicht mehr händisch, sondern automatisch erledigt und dadurch verbessert werden, sondern auch die optimale Innenraumnutzung der LKW-Hubwagenkoffer genutzt und weniger Fahrten des LKW- Hubwagenkoffers, damit die Umweltbilanz der Cateringunternehmen verbessert, aber auch die Umweltbilanz der Fluggesellschaften wegen kurzer Energienutzung durch Flugzeugstromgeneratoren (APU), bei laufenden Motoren der Flugzeuge mit andauernder Abgasbildung, wegen der Dauer der Be- und Entladung eines Flugzeugs und anderen Prozessen, als auch Be- und Entladung des LKW- Hubwagenkoffers selbst in den Werkbereichen der Cateringunternehmen verkürzt werden. Es soll betont werden, dass alle Prozessbeteiligten an der Flugzeugabfertigung insgesamt neue Prozessbedingungen wegen der Veränderungen der Be- und/ oder Entladung des Caterings an Flugzeugen und deswegen die Vorteile für alle eigenen Belange in ihren jeweiligen Bereichen vorfinden und umsetzen können. Platzverhältnisse in den Parkpositionen, Dauer der gesamten Prozesse, stationsspezifische Effekte auf alle Prozesse bei der Flugzeugabfertigung und hausinterner Strukturveränderungen in den Cateringunternehmen sind deswegen auslösende positive Folgen in allen Prozessbereichen der Abfertigung von Flugzeugen, hinsichtlich Personalbeanspruchung, körperlicher Arbeitsleistung, Stresssituation bei der Abfertigung, Profitabilität bei allen Prozessteilnehmern.

### Abbildungen:

- Fig. 1: Darstellung des "Cart-in-Cart" Systems
- Fig. 2: Draufsicht der Tragplatte im Transportwagen für Trolleys
- Fig. 3: Seitenansicht des Transportwagens
- Fig. 4-1: Darstellung der Seitenwände des Transportwagens
- Fig. 4-2: Detailvergrößerung von Fig. 4-1
- Fig. 5: Darstellung des Transportwagens mit eingebauter Transportschiene und U-Laufschiene
- Fig. 6-1: Seitenansicht der U-Laufschiene
- Fig. 6-2: Vorderansicht der U-Laufschiene mit der Transportschiene
- Fig. 7: Draufsicht bis zur ersten Ebene des Unterbodens des Transportwagens
- Fig. 8-1: Seitenansicht der Seiltechnik zur Verbreiterung oder Verkleinerung der Breite des Transportwagens
- Fig. 8-2: Darstellung des Seilzugs mit Hebeltechnik
- Fig. 9-1: Draufsicht der Seiltechnik zur Verbreiterung oder Verkleinerung der Breite des Transportwagens
- Fig. 9-2: Detailvergrößerung von Fig. 9-1
- Fig. 9-3: Darstellung des Querschnitts des Unterbodens des Transportwagens entlang A-A in Fig. 9-1
- Fig. 10-1: Draufsicht der Technikebene im Transportwagen für den Aufbau der U-Laufschiene
- Fig. 10-2: Seitenansicht der Technikebene im Transportwagen für den Aufbau der U-Laufschiene
- Fig. 11: Darstellung des Ablaufs des Aufbaus der U-Laufschiene
- Fig. 12: Darstellung des Antriebs für den Gleitschlitten
- Fig. 13-1: Darstellung des Ablaufs des Aufbaus der Transportschiene auf der U- Laufschiene
- Fig. 13-2: Detailansicht zu Fig. 13-1
- Fig. 14-1: Darstellung eines Transportwagens, der mit zwei halben Trolleys be laden ist und auf einer ausgelegten Transportschiene nach oben transportiert wird.
- Fig. 14-2: Detailansicht zu Fig. 14-2
- Fig. 15: Darstellung des Transitverfahrens, Lkw/Hubwagenkoffer und Flugzeugkabine mit dem Schienentransportsystem

### Bezugszeichenliste:

1. Trolley
2. Transportwagen
3. Tragplatte
4. Führungsschienen
5. Zwillingsräder eines Trolleys
6. Laufhebel
7. Feststellbremse
8. Räder des Transportwagens
9. U-förmige Profil-Schiene
10. Seilschacht
11. Seilführung
12. Spindelrohr
13. Spindel des Transportwagens
14. Zusammengefaltete U-Laufschiene
15. Seiteriwand des Transportwagens
16. Seitensegelkammer
17. Zusammengefaltete Transportschiene
18. Zahnschiene der U-Laufschiene
19. Radaufhängung
20. U-Laufschiene
21. Laufwalzen der Kassette der Transportschiene
22. Darstellung der Vorderansicht der Zahnschiene unter der U-Laufschiene
23. Verbindungsstab
24. L-förmige Winkel
25. Kassette der Transportschiene
26. Führungsseil
27. U-Aluminiumschienen
28. Rohr-in-Rohrverbindung mit Federmechanismus
29. Verbindungsgelenke
30. Federbehälter
31, 32 Seilführungsräder
33. Seitenaußenwand des Transportwagens
34. Seiteninnenwand des Transportwagens
35. Zahnriemenverbindung zum Motor für die Verbreitung und Verkleinerung des Transportwagens
36. Zahnrad an der Außenseite der Achse für die Verbreiterung und die Verkleinerung mit Motor
37. Technikebene im Boden des Transportwagens
38. Aluminiumeckprofil des Bodens des Transportwagens
39. Befestigungsmittel
40. Öse für die Befestigung des Führungsseils zum Laufhebel 41, 42 Quergelenke
43. Längsmetallstange
44. Feder
45. Abdeckung des Federbehälters
46. Ausschnitte für die Zwillingsräder des Transportwagens
47. Laufrad des Transportwagens
48. Aluminiumvierkantrohr für die Stabilität der Transportschiene
49. Führungsplastikhülse
50. Nieteneinfuhr
51. Schenkel des starren Leichtmetallwinkels
52. Kopf des starren Leichtmetallwinkels
53. Linsenkopfschraube (53) mit Innengewinde
54. Flachkopfschraube
55. Seitenwand des Transportwagens
56. Leichtmetallwinkel
57. Elektromotor
58. Zahnriemen
59. Zahnradachse
60. Zahnräder
61. Transportschiene
62. Zahnrad
63. Flachmotore
64. Zahnriemen
65. Kugellagerzylinder
66. Spindel
67. Spindellager
68. Transportwagentür
69. Führungslaufräder der U-Laufschiene
70. Rampe
71. Scharnier
72. halber Trolley
73. Transportplatte
74. Gleitplatte
75. Laufbahn in der Transportschiene
76. Laufrad für den Aus- und Einbau des Gleitschlittens
77. Laufwalze des Transportwagens
78. Laufwalze des Gleitschlittens
79. Bodenplatte des Laufbahns
80. Laufbahn für die Laufwalzen vom Transportwagen
81. Achse für die Laufwalzen und die Laufräder
82. Klappe am Transportwagen mit Rampenfunktion
83. Draufsicht des Laderaums eines Lkw-Hubwagenkoffers
84. Lkw-Transportwagenweiche für das Beladen eines Flugzeugs
85. Lkw-Transportwagenweiche für das Entladen eines Flugzeugs
86. Schienentransportsystem zwischen dem Lkw und der Flugzeugkabine 86'. Schienentransportsystem im Lkw
87. Flexibler Mittelteil des Schienentransportsystems
88. Flugzeugtür
89. Flugzeugkabine
90. Entnahmestelle der Behältnisse
91. Beladestelle der Behältnisse
92. Schienenweiche
93. Lkw Transportwagen
94 Laufschiene an der Be- und Entladeebene/unten
T. Treppe

### Ausführungsbeispiele:

Weitere Vorteile und Einzelheiten der vorliegenden Erfindung ergeben sich aus dem anhand der Zeichnungen beschriebenen und die Erfindung nicht einschränkenden Ausführungsbeispiel.

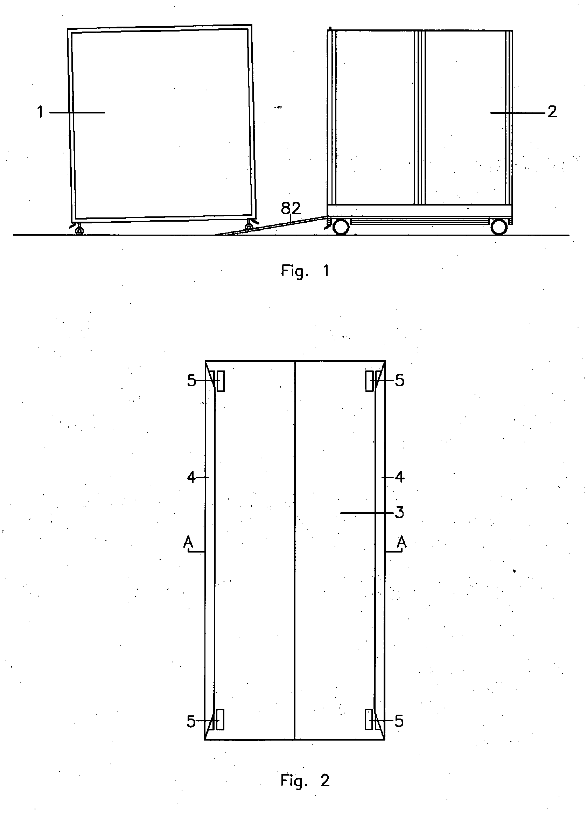

Fig. 1 stellt ein "Cart-in-Cart-System" dar. Ein Trolleys (1) wird mittels einer Rampe (82) in den erfindungsgemäßen Transportwagen (2) geschoben.

Fig. 2 ist eine Draufsicht der Tragplatte (3) im Transportwagen für Behältnisse wie z. B. Trolleys. Die Tragplatte weist zwei Führungsschienen (4) für die Zwillingsräder (5) der Trolleys auf. Die Führungsschienen (4) dienen als Arretierung der Trolleys mit Rädern und verhindern eine übermäßige Bewegung der Trolleys während des Transports im Transportwagen.

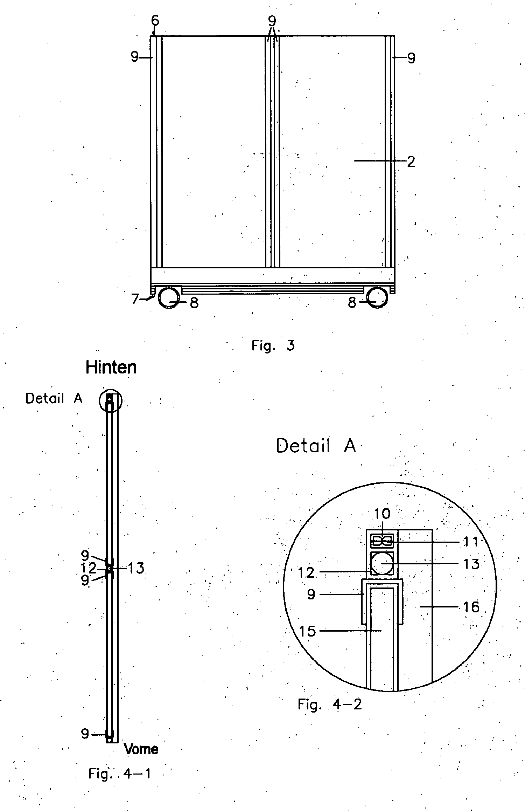

Fig. 3 zeigt die Seitenansicht des Transportwagens (2). Der erfindungsgemäße Transportwagen (2) ist mit einem Laufhebel (6) versehen, der den Transportwagen auf die Breite eines Standardtrolleys verkleinern oder vergrößern kann. Der Laufhebel bewegt gleichzeitig beide Seiten des Transportwagens um zusammen maximal 2,5 cm nach innen oder außen. Eine Feststellbremse (7) der Räder (8) ist unter dem Transportwagen vorgesehen. Der Transportwagen weist mehrere U-förmige Profil-Schienen (9) zum Einschieben der Seitenwände auf. Die Struktur der U-förmigen Profil-Schiene (9) wird in Fig. 4 näher erläutert.

Fig. 4-1 stellt die Seitenwände des Transportwagens dar. Fig. 4-2 (Detail A) zeigt die Detailvergrößerung von Fig. 4-1. Die Seitenwand (15) ist vorzugsweise mit Kunststoff beschichtet und wird in die U-förmigen Profil-Schienen (9) eingebracht. Am Rand der Seitenwand ist eine Seitensegelkammer (16) vorgesehen. In der Seitensegelkammer des Transportwagens ist ein Seitensegel (nicht gezeigt) in einer Signalfarbe eingebaut, das sich auf einer Laufschiene bei dem Aufbau der U-Laufschiene mit ausbaut und den begehbaren Teil der Treppe neben der Laufschiene wegen Unfallgefahr anzeigt. Die Seitenwand ist zusätzlich mit einer Spindel (13), die in einen Spindelrohr (12) eingebracht ist, versehen. Eine Seilführung (11) ist in einen Seilschacht (10) der Seitenwand eingebracht.

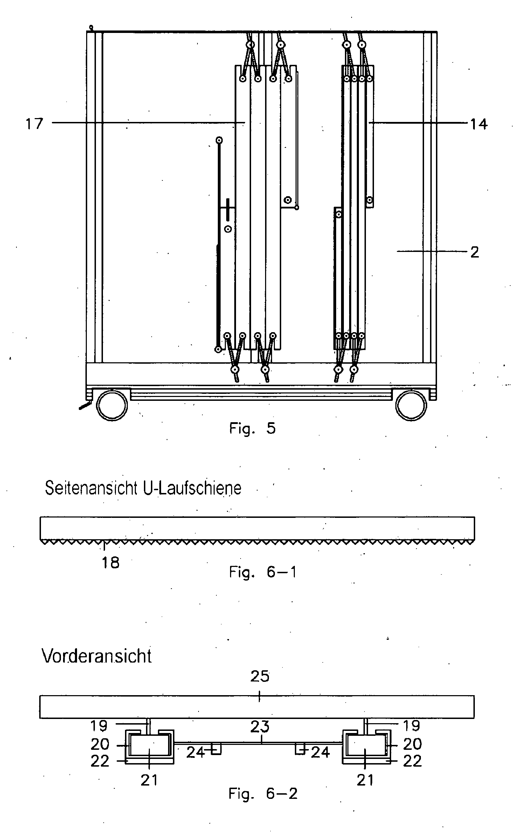

Fig. 5 zeigt den erfindungsgemäßen Transportwagen (2) mit eingebauter zusammengefalteter Transportschiene (17) und Formprofil-Laufschiene (14) (in diesem Beispiel U-förmige Laufschiene und im Folgenden wird als U-Laufschiene genannt).

In Fig. 6-1 ist die Seitenansicht der U-Laufschiene mit einer Zahnschiene (18) unter der U-Laufschiene dargestellt. In Fig. 6-2 ist die Vorderansicht der U-Laufschiene (20) mit einer Kassette (25) der Transportschiene dargestellt. Zwischen zwei U-Laufschienen (20) sind mehrere Verbindungsstäbe (23) vorgesehen. Die Verbindungsstäbe (23) sind jeweils mit zwei L-förmigen Winkeln (24) versehen, die sich beim Aufbau der U-Laufschiene an die Treppenkanten legen. (22) stellt die Vorderansicht der Zahnschiene (18) unter der U-Laufschiene (20).

Die Laufwalzen (21) der Kassette (25) gleiten in der U-Laufschiene und bewegen die Transportschiene nach oben. Die Laufwalze ist durch eine Radaufhängung (19) mit der Kassette (25) verbunden.

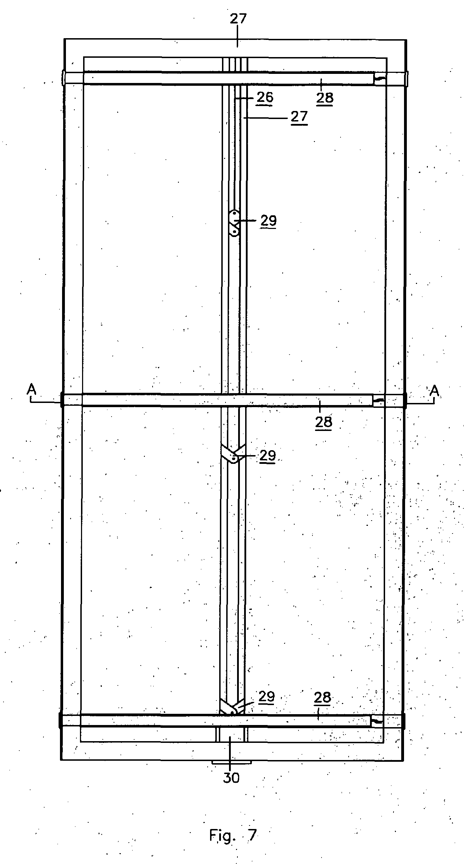

Fig. 7 zeigt eine Draufsicht bis zur ersten Ebene des Unterbodens des Transportwagens. Das Führungsseil (26) dient für den Hebelmechanismus. Zwei U-Aluminiumschienen (27) befinden sich neben dem Führungsseil (26). Die Führungstechnik mit Federmechanik für die Verbreiterung und Verkleinerung des Transportwagens befindet sich in mehreren Rohren (28). Eine Feder (nicht gezeigt) befindet sich in einem Federbehälter (30). Mehrere Verbindungsgelenke (29) sind zwischen den zwei U-Aluminiumschienen (27) vorhanden, womit der Boden des Transportwagens verbreitert bzw. verkleinert werden kann.

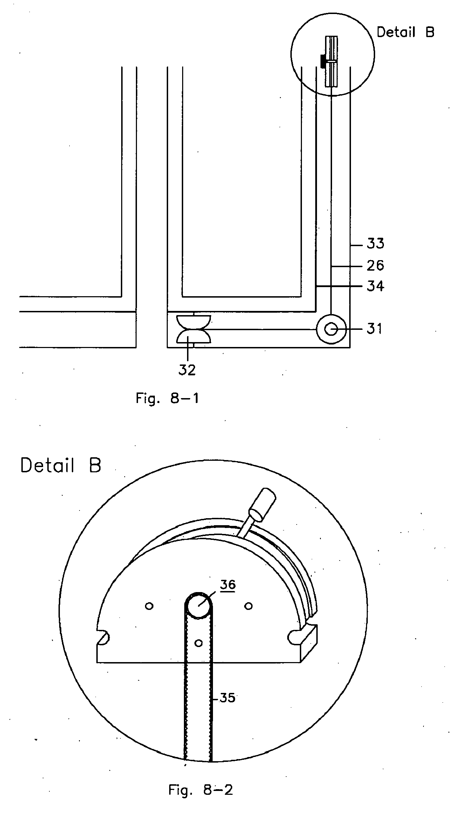

Fig. 8-1 zeigt die Seitenansicht der Seiltechnik zur Verbreiterung oder Verkleinerung der Breite des Transportwagens. Das Führungsseil (26) läuft zunächst zwischen der Seitenaußenwand (33) und der Seiteninnenwand (34) des Transportwagens und wird durch zwei Seilführungsräder (31, 32) umgelenkt und zu dem Verbreiterungsgestänge geführt. Fig. 8-2 (Detail B) stellt den Seilzug mit Hebeltechnik dar. Als Alternative sind ein Zahnrad (36) an der Außenseite der Achse sowie ein Zahnriemen (35) für die Verbreiterung bzw. die Verkleinerung vorgesehen. Das Zahnrad ist mit dem Motor des Transportwagens verbunden, um die Verbreitung bzw. die Verkleinerung des Transportwagens elektrisch zu ermöglichen.

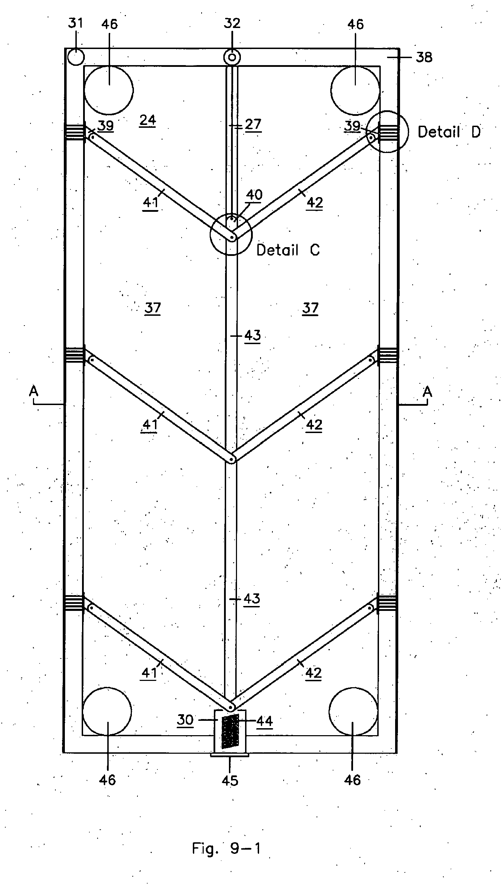

Fig. 9-1 zeigt die ausführliche Draufsicht der Seiltechnik zur Verbreiterung oder Verkleinerung der Breite des Transportwagens. Die Technikebene im Boden des Transportwagens (37), der mit einem Aluminiumeckprofil (38) versehen ist, teilt sich beim Verbreiterungsvorgang. Das Führungsseil (hier nicht gezeigt) wird durch zwei Seilführungsräder (31, 32) umgelenkt und zu dem Verbreiterungsgestänge geführt. Das Führungsseil wird durch eine Öse (40) zum Laufhebel befestigt. Zwei U-Aluminiumschienen (27) sind hier zu sehen. Mehrere Metallbänder, die jeweils aus zwei Quergelenken (41, 42) bestehen, sind jeweils mit zwei Befestigungsmitteln (39) an der Seitenwand des Transportwa-gens befestigt. Die Quergelenke (41, 42) verbreitern oder verkleinern den Transportwagen und sind an einer Längsmetallstange (43) angebracht. Eine Feder (44) befindet sich in einem Federbehälter (30), der mit einer Abdeckung (45) versehen ist. Wenn der Transportwagen verkleinert wird, wird die Feder (44) entspannt. Wenn der Transportwagen verbreitert wird, wird die Feder (44) gespannt. Die Zwillingsräder des Transportwagens befinden sich in den Ausschnitten (46).

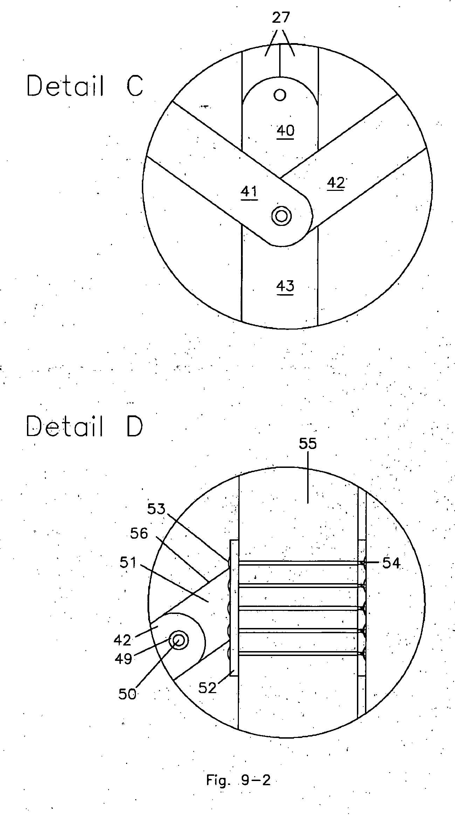

Fig. 9-2 stellt die Detailvergrößerung von Fig. 9-1 dar. In Detail C ist die Befestigungsstelle (40) an der Längsmetallstange (43) für das Führungsseil, das mit dem Hebel verbunden ist, dargestellt. Die Quergelenke (41, 42) sind an einer Längsmetallstange (43) angebracht. Detail D zeigt ausführlich die Befestigungsmittel des Quergelenks (42) an der Seitenwand (55) des Transportwagens. Das Ende des Quergelenks (42) ist mit einer Öffnung für eine Führungsplastikhülse (49) für die Nieteneinfuhr (50) versehen, womit das Quergelenk (42) mit dem Schenkel (51) des starren Leichtmetallwinkels (56), der ebenfalls eine Öffnung für die Nieten besitzt, verbunden werden kann. Der Kopf (52) des starren Leichtmetallwinkels ist mit mehreren Öffnungen versehen. In jede der Öffnungen wird jeweils eine Linsenkopfschraube (53) mit Innengewinde eingesteckt werden. Jede Linsenkopfschraube wird auf der anderen Seite der Seitenwand mit einer Flachkopfschraube (54) zusammengeschraubt, womit der Leichtmetallwinkel und somit das Quergelenk an der Seitenwand befestigt werden kann.

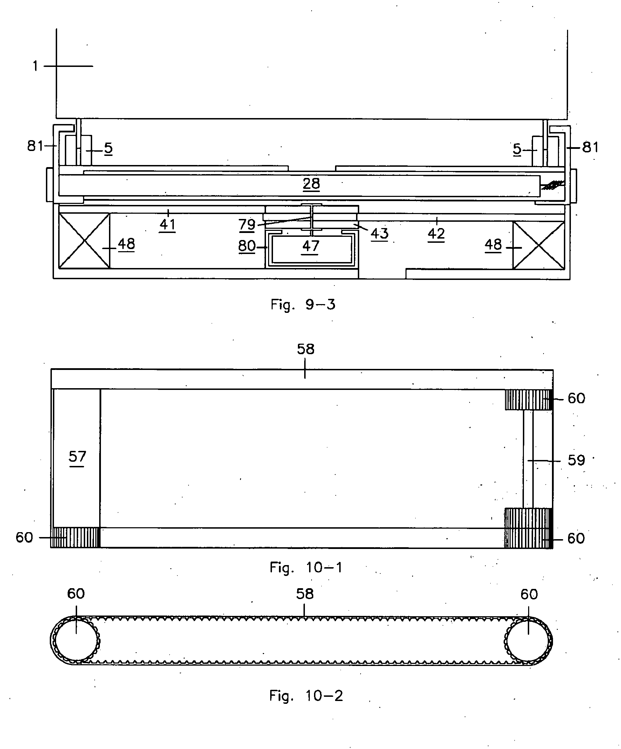

Fig. 9-3 Darstellung des Querschnitts entlang A-A in Fig. 9-1. Das Laufrad (47) des Transportwagens, das sich in einen Laufbahn (80) bewegt, unterstützt die Gestänge (Quergelenken (41, 42), Längsmetallstange (43)), damit sie während dem Betrieb nicht verbogen werden. Folglich können leichte Materialien, wie z.B. Aluminium, für die Herstellung der Gestänge verwendet werden. Die beiden Aluminiumvierkantrohren (48) dienen dazu, die Stabilität der gesamten Konstruktion zu gewährleisten.

Fig. 10-1 zeigt die Draufsicht der Technikebene im Transportwagen für den Aufbau der U-Laufschiene, während Fig. 10-2 die Seitenansicht der Technikebene im Transportwagen für den Aufbau der U-Laufschiene darstellt. An der Unterseite der U-Laufschiene befindet sich jeweils eine Zahnschiene (nicht gezeigt). Unter der Zahnschiene drehen sich die Zahnräder (60). Die Zahnräder (60) sind mit einem Elektromotor (57) über den Zahnriemen (58) verbunden. (59) ist eine Zahnradachse.

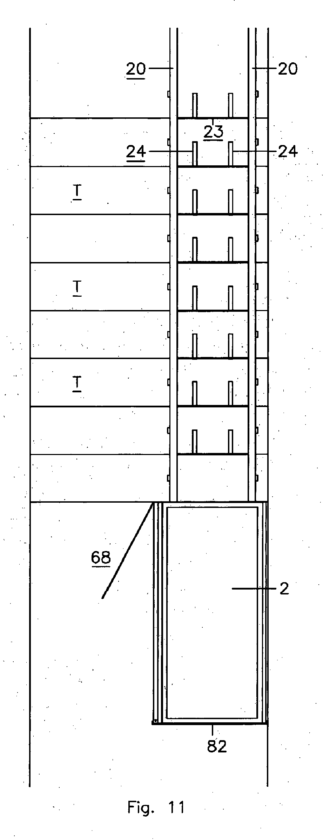

Fig. 11 stellt den Ablauf des Aufbaus der U-Laufschiene dar. Der Transportwagen (2) wird an die Treppe (61) herangefahren. Die U-Laufschiene (20) wird auf die Treppe (T) ausgelegt. Zwischen zwei U-Laufschienen (20) sind mehrere Verbindungsstäbe (23) vorgesehen. Die Verbindungsstäbe (23) sind jeweils mit zwei L-förmigen Winkeln (24) versehen, die sich beim Aufbau der U-Laufschiene an die Treppenkanten legen.

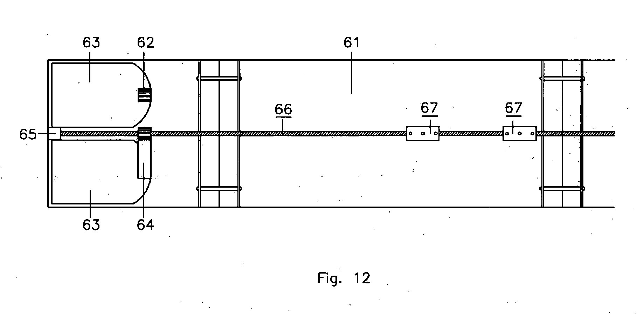

Fig. 12 zeigt den Führungsmechanismus der Laufräder mit Schienen. Auf der ausgelegten Transportschiene (61) befinden sich zwei Flachmotore (63), die ein Zahnrad (62) und einen Zahnriemen (64) betreiben. Der Zahnriemen (64) treibt die Spindel (66), die in einem Kugellagerzylinder (65) gelagert ist, an. Entlang der Spindel (66) befinden sich mehrere Spindellager (67) mit Befestigungsvorrichtung für den Gleitschlitten (nicht gezeigt).

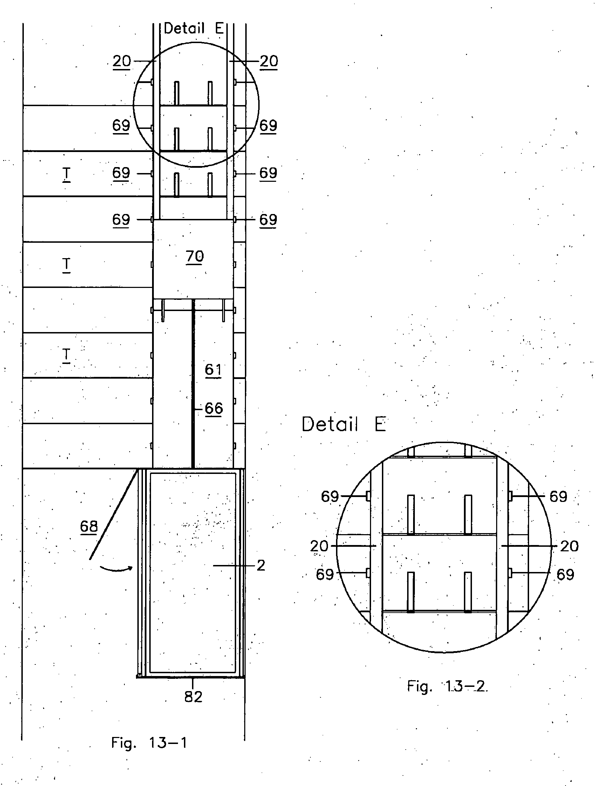

Fig. 13-1 zeigt den Ablauf des Aufbaus der Transportschiene auf der U- Laufschiene. Der erfindungsgemäße Transportwagens (2) wird an die unterste Stufe der Treppe herangefahren. Die Transportwagentür (68) befindet sich auf einer Seite des Transportwagens. Die U-Laufschiene (20) wird zunächst auf die Treppe (T) aufgelegt. Die Führungslaufräder (69) der U-Laufschiene ermöglichen es, dass die U-Laufschiene im Transportwagen laufen kann. Die Transportschiene (61) wird mittels Laufwalzen (siehe Fig. 6-2) in der U-Laufschiene nach oben geleitet. Eine Rampe (70) ist mittels Scharnier mit der obersten Kassette verbunden, um das Be- und Entladen mit den Behältnissen zu ermöglichen. Fig. 13-2 stellt die Detailansicht zu Fig. 13-1.

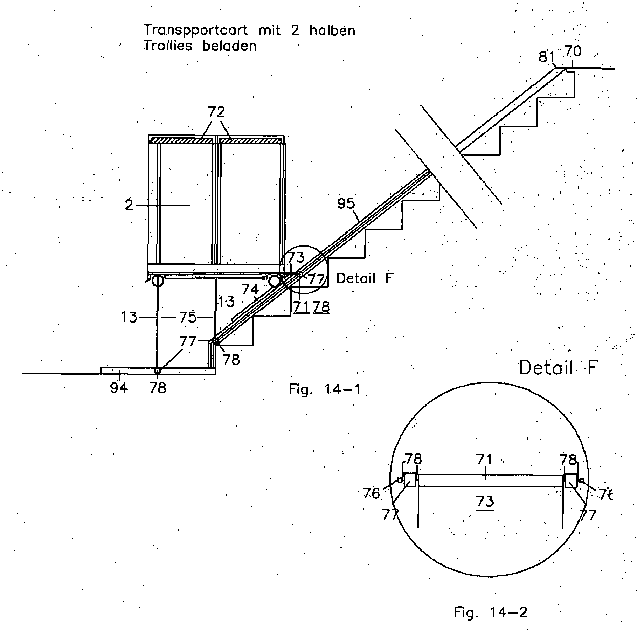

Fig. 14-1 zeigt einen Transportwagen (2), der mit zwei halben Trolleys (72) beladen ist und auf einer ausgelegten Transportschiene nach oben transportiert wird. In der untersten Ebene des Unterbodens des Transportwagens befindet sich ein Bereich zum Einführen der Transportplatte (73) des Gleitschlittens. Durch ein Scharnier (71) (siehe Fig. 14-2) ist die Transportplatte (73) mit der Gleitplatte (74) des Gleitschlittens verbunden. Die Gleitplatte lässt sich mit der Transporttechnik in der Transportschiene mittels Zahnrad und Zahnriemenkonstruktion zur Bewegung auf den Transportschienen antreiben. Im Transportwagen sind Spindelrohre mit eingebauten Spindeln (13) vorgesehen. Die Spindeln (13) sind mittels einer Spindelquerverbindung (nicht gezeigt) miteinander verbunden, um die Stabilität des Transportwagens während dem Transport der Behältnisse zu erhöhen. Am unteren Teil der Spindeln ist jeweils eine Laufwalze (77) mit Kugellager angebracht. Diese Spindeln drehen sich automatisch, um die Last des Transportwagens mit Behältnissen und das Gewicht der Transportplatte des Gleitschlittens abzustützen und gleichzeitig wird die Transportplatte auf der Transportschiene im 3 Grad Winkel zu der Ebene der Be- und Ausladestation transportiert. Die Zwillingsräder des Transportwagens bewegen sich in den Laufbahn in der Transportschiene (75). Die Laufschiene an der untenen Be- und Entladeebene (94) ist zu sehen.

Fig. 14-2 stellt die Detailansicht zu Fig. 14-1. Das Scharnier (71), das die Transportplatte (73) und die Gleitplatte (74) in Fig. 14-1 verbindet, ist zu sehen. Durch das Scharnier ist eine Metallstange (nicht gezeigt) gezogen, an deren Ende links und rechts Doppelwalzen (78) angebracht sind, die sich beim Hin- und Hergleiten in einer Laufschiene in der Transportschiene bewegen. Die Laufräder (76) für den Aus- und Einbau des Gleitschlittens sowie die Achse (81) für die Laufwalzen und die Laufräder sind zu sehen.

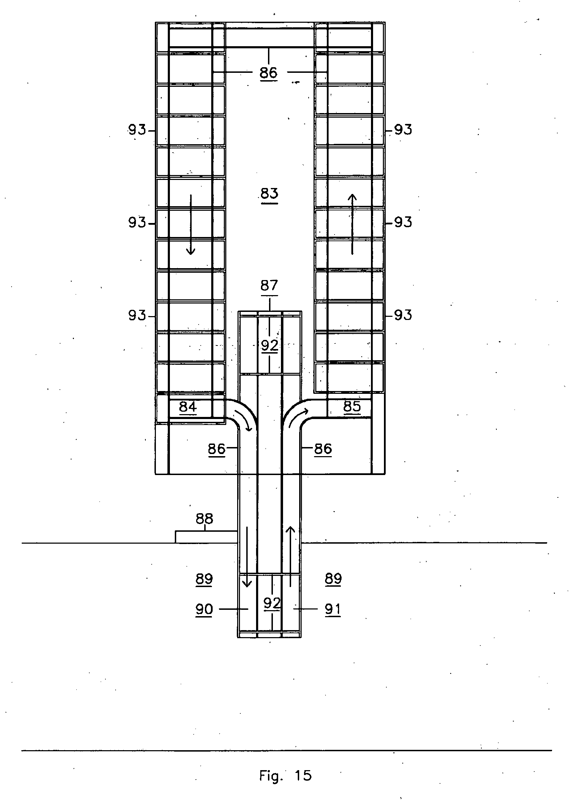

Fig. 15 stellt die Kabine im Transitverfahren dar. Die erfindungsgemäße Transportschiene kann als Nachrüstung in jedem Lkw-Hubwagenkoffer eingebaut werden. Mehrere Lkw Transportwagen (93), die mit Behältnissen beladen sind, werden in dem Lkw-Hubwagenkoffer (83) angeordnet. Vier U-förmige Laufschienen und zwei Transportschienen werden zwischen dem Lkw-Hubwagenkoffer (83) und der Flugzeugkabine (89) ausgelegt, wodurch zwei Schienentransportsysteme (86) zum Beladen bzw. Entladen eines Flugzeugs aufgebaut werden, wobei das Einladen der beladenen Behältnisse und das Ausladen der leeren Behältnisse gleichzeitig durchgeführt werden können. Die Transportwagen (93) werden über die Lkw-Transportwagenweiche (84) für das Beladen des Flugzeugs auf das erste Schienentransportsystem (86) zwischen dem Lkw und der Flugzeugkabine heraufgefahren. Die beladenen Behältnisse werden auf der Entnahmestelle (90) entnommen. Die Transportwagen (93) werden wieder auf der Beladestelle der Behältnisse (91) mit leeren Behältnissen beladen und fahren auf das zweite Schienentransportsystem (86) zwischen dem Lkw und der Flugzeugkabine. Sie fahren dann über die Lkw-Transportwagenweiche (85) für das Entladen des Flugzeugs von dem zweiten Schienentransportsystem herunter. Mehrere Schienentransportsysteme (86') sind im Lkw aufgebaut, wodurch ein Kreislauf der Transportwagen entsteht. Das Mittelteil (87) der zwei Schienentransportsysteme (86) ist flexibel, damit die Schienentransportsysteme an der Hinterseite des Lkws zum Be- und Entladen des Lkw verwendet werden können.

## Patentansprüche

1. Schienentransportsystem umfassend mindestens die folgenden Komponenten:
- zwei Formprofil-Laufschienen (20), die auf einer Treppe oder auf einer ebenen Strecke ausgefahren werden, wobei die Formprofil-Laufschienen jeweils mehrere faltbare Schienenkassetten oder teleskopierbare Schienenabschnitte aufweisen und die zwei Formprofil-Laufschienen (20) mindestens einen Elektromotor (57) aufweisen,
- eine Transportschiene (61), die mindestens einen weiteren Elektromotor und mehrere faltbare Schienenkassetten (25) oder teleskopierbare Schienenabschnitte aufweist, und
- einen Transportwagen (2), der auf der Transportschiene (61) bewegt wird und in dem die Formprofil-Laufschienen (20) und die Transportschiene (61) bei Nichtbenutzung eingelagert sind, wobei der Transportwagen (2) mit mindestens einem weiteren Elektromotor versehen ist.

2. Schienentransportsystem nach Anspruch 1, **dadurch gekennzeichnet, dass**
- zwischen den zwei Formprofil-Laufschienen (20) mehrere Verbindungsstäbe (23) vorgesehen sind, wobei die Verbindungsstäbe (23) jeweils in der Mitte mit mindestens einem L-förmigen Winkel (24) versehen sind, der sich beim Aufbau der Formprofil-Laufbahnen (20) an die Treppenkanten legt,
- sich jeweils eine Zahnschiene (18) an der Unterseite der zwei Formprofil-Laufschienen befindet, und
- unter der Zahnschiene (18) sich Zahnräder (60) drehen, die im Transportwagen (2) angebracht sind, vom Elektromotor (57) angetrieben werden und mit einem Zahnriemen (58) verbunden sind, womit die beiden Formprofil-Laufschienen (20) in einem größeren Winkel, als dem Stei-gungswinkel der Treppe, auf die Treppenkante nach oben bewegt werden und sich am Ende des Aufbauprozesses auf die Treppe legen.

3. Schienentransportsystem nach Anspruch 1 oder 2, **dadurch gekennzeichnet, dass** an den Formprofil-Laufschienen (20) mehrere Treppenseiten-Abstandshalter angebracht sind.

4. Schienentransportsystem nach einem der Ansprüche 1 bis 3, **dadurch gekennzeichnet, dass** die Formprofil-Laufschienen (20) U-förmige Laufschienen sind.

5. Schienentransportsystem nach einem der Ansprüche 1 bis 4, **dadurch gekennzeichnet, dass** seitlich an den Schienenkassetten (25) oder den Schienenabschnitte der Transportschiene (61) Verbindungsschienen angebracht sind, die die Faltung und Entfaltung der Schienenkassetten (25) oder den Einzug und Auszug der Schienenabschnitte unterstützen.

6. Schienentransportsystem nach einem der Ansprüche 1 bis 5, **dadurch gekennzeichnet, dass** eine Rampe (70) mittels Scharnier an der obersten Kassette oder an dem obersten Schienenabschnitt befestigt ist und die untersten Schienenkassette oder der untersten Schienenabschnitt mit einer angebrachten Querstange versehen ist.

7. Schienentransportsystem nach einem der Ansprüche 1 bis 6, **dadurch gekennzeichnet, dass** in den Schienenkassetten (25) oder Schienenabschnitten mehrere Ebenen bestehen, die mit Abtrennungen aus leichten Kunststoffplatten versehen sind, wobei
- in den Ebenen der Schienenkassetten oder Schienenabschnitte eine Zahnradtechnik, eine oder mehrere Zahnriemen (64) und ein oder mehrere Flachmotoren (63) oder Röhrenmotor untergebracht ist, und
- in den verschiedenen Ebenen, 4-kant-Leichtmetallverstebungen oder Rundstabverstrebungen eingebaut sind.

8. Schienentransportsystem nach einem der Ansprüche 1 bis 7, **dadurch gekennzeichnet, dass** die Transportschiene (61) zusätzlich mit Metallfedern,
Luftfedern oder Gasfedern an der Unterkante der Kassetten bzw. Abschnitte versehen ist, die ein langsames Absenken der Transportschien auf die Treppenkanten unterstützen.

9. Schienentransportsystem nach einem der Ansprüche 1 bis 8, **dadurch gekennzeichnet, dass** die einzelnen faltbaren Schienenkassetten bzw. teleskopierbaren Schienenabschnitte mittels Zahnräder im Transportwagen unter den Zahnschienen, die an der Unterseite der Schienenkassetten bzw. Schienenabschnitte angebracht sind, bewegt werden.

10. Schienentransportsystem nach einem der Ansprüche 1 bis 9, **dadurch gekennzeichnet, dass** die Transportschiene (61) an beiden Enden jeweils mit einem oder mehreren Befestigungsmitteln zur Befestigung der Schiene auf dem oberen Treppenabsatz und dem unteren Treppenabsatz versehen ist.

11. Schienentransportsystem nach einem der Ansprüche 1 bis 10, **dadurch gekennzeichnet, dass** sich auf der Transportschiene ein integrierter Gleitschlitten bewegt, der mindestens eine Gleitplatte (74) und eine Transportplatte (73) besitzt, wobei
- die Gleitplatte (74) und die Transportplatte (73) mit einem Scharnier (71) verbunden sind und sich zusammen klappen lassen,
- unter der Gleitplatte (74) mehrere Laufwalzen sitzen, die ein reibungsarmes Hin- und Hergleiten in der Transportschiene sichern und
- sich beim Beenden des gesamten Be- und/oder Entladeprozesses der Gleitschlitten automatisch an den oberen Teil der Transportschiene bewegt.

12. Schienentransportsystem nach Anspruch 11, **dadurch gekennzeichnet, dass** die Transportplatte den Transportwagen transportiert, wobei
- die Transportplatte (73) in einem größeren Winkel als 90° zur Be- und Entladeebene bewegt wird,
- links und rechts der Transportplatte (73) Sicherungschienen angebracht sind, die den jeweilig größeren Winkel als 90° beim Ausklappen der zwei Gleitplatten festlegen und
- an der Transportplatte (73) mehrere T-Stifte angebracht sind, die sich mit der Verriegelungstechnik im Transportwagen verschließen und damit eine sichere Befestigung des Transportwagens mit Behältnissen erreichen.

13. Schienentransportsystem nach einem der Ansprüche 1 bis 12, **dadurch gekennzeichnet, dass** die Breite der Transportschiene kleiner als die Breite des Transportwagens mit Unterbau ist.

14. Schienentransportsystem nach einem der Ansprüche 1 bis 13, **dadurch gekennzeichnet, dass** der Transportwagen zusätzlich mit einem Stromkabel und einem Stecker versehen ist, die an einer Steckdose im Flugzeug angeschlossen werden können, wobei das Stromkabel mit dem Stecker in einer stolperfreien Schiene untergebracht ist.

15. Schienentransportsystem nach einem der Ansprüche 1 bis 14, **dadurch gekennzeichnet, dass** der Transportwagen mit einem Laufhebel (6) versehen ist, der den Transportwagen (2) auf die Breite eines Standardtrolleys (1) verkleinern oder vergrößern kann.

16. Schienentransportsystem nach einem der Ansprüche 1 bis 15, **dadurch gekennzeichnet, dass** der Elektromotor im Transportwagen sowie der Elektromotor in der Transportschiene jeweils mit einem Akku für Stromausfall oder nicht zur Verfügung stehender Stromquelle im Flugzeug betrieben werden kann.

17. Schienentransportsystem nach einem der Ansprüche 1 bis 16, **dadurch gekennzeichnet, dass** der Transportwagen (2) über eine Kurbelantriebsmöglichkeit verfügt.

18. Schienentransportsystem nach einem der Ansprüche 1 bis 17, **dadurch gekennzeichnet, dass** ein Seitensegel in einer Signalfarbe in einer Seite des Transportwagens eingebaut ist, das sich bei dem Aufbau der Transportschiene mit ausbaut und den begehbaren Teil der Treppe neben der Transportschiene wegen Unfallgefahr anzeigt.

19. Schienentransportsystem nach einem der Ansprüche 1 bis 18, **dadurch gekennzeichnet, dass** sich im Boden des Transportwagens mehrere Ebenen mit Abtrennung befinden, wobei
- In der obersten Ebene eine Laufbahnkonstruktion für die zusätzlich Arretierung der Behältnisse mit Rädern vorgesehen ist, und
- in der untersten Ebene sich eine Verriegelungstechnik für den Transportwagen und die Transportplatte eines Gleitschlittens befindet.

20. Schienentransportsystem nach einem der Ansprüche 1 bis 19, **dadurch gekennzeichnet, dass** sich links und rechts des Transportwagens jeweils ein Spindelrohr mit eingebauten Spindeln (75, 76) befindet, wobei am unteren Teil der Spindeln die Laufwalzen des Transportwagens mit Kugellager angebracht sind und die Spindelrohre an den Seiten des Transportwagens am untersten
Teil der Spindel mit einer Querstange verbunden sind.

21. Verfahren zum Aufbau eines Schienentransportsystem nach Anspruch 1 und zum Transport eines oder mehrerer Behältnisse für das Be- und/oder Entladen der Kombüse eines Flugzeuges, **dadurch gekennzeichnet, dass** das Verfahren mindestens die folgenden Schritte umfasst:
- Anfahren und Positionieren eines Transportwagens (2), in dem zwei Formprofil-Laufschienen (20) und eine Transportschiene (61) eingelagert sind, an die unterste Treppenstufe einer Treppe, wobei der Transportwagen mit mindestens einem Elektromotor versehen ist, wobei die Formprofil-Laufschienen (20) jeweils mehrere faltbare Schienenkassetten oder teleskopierbare Schienenabschnitte aufweisen und wobei die Transportschiene (61) mindestens einen Elektromotor und mehrere falt-bare Schienenkassetten (25) oder teleskopierbare Schienenabschnitte aufweist,
- Auslegen der zwei Formprofil-Laufschienen (20) auf der Treppe, wobei die Formprofil-Laufschienen in einem größeren Winkel, als dem Steigungswinkel der Treppe, auf die Treppenkante nach oben bewegt werden und sich am Ende des Aufbauprozesses auf die Treppe legen,
- Auslegen der Transportschiene (61) auf der Formprofil-Laufschiene (20), wobei sich die Laufwalzen (21), die an der Unterseite der Transportschiene (61) angebracht sind, in den Formprofil-Laufschienen (20) bewegen,
- Transportieren des bzw. der Behältnisse, die im Transportwagen (2) beladen sind, mittels eines Gleitschlittens, der mindestens eine Gleitplatte (74) und eine Transportplatte (73) besitzt, wobei die Gleitplatte (74) und die Transportplatte (73) mit einem Scharnier (71) verbunden sind und sich zusammen klappen lassen, wobei die Transportplatte (73) in einen Schlitz unten im Transportwagen geschoben und befestigt wird und wobei unter der Gleitplatte (74) mehrere Laufwalzen sitzen, die ein reibungsarmes Hin- und Hergleiten in der Transportschiene (61) sichern.

22. Verfahren nach Anspruch 21, **dadurch gekennzeichnet, dass** das Verfahren zusätzlich mindestens die folgenden Schritte umfasst:
- Anordnen mehrerer Transportwagen, die mit Behältnissen beladen sind, in einen Lkw-Hubwagenkoffer,
- Auslegen von vier Formprofil-Laufschienen und zwei Transportschienen zwischen dem Lkw-Hubwagenkoffer und dem Flugzeug, wodurch zwei Schienentransportsysteme zum Beladen bzw. Entladen eines Flugzeugs aufgebaut werden,
- Herauffahren der Transportwagen auf das Schienentransportsystem zum Beladen des Flugzeugs über eine Weiche für das Beladen des Flugzeugs,
- Herunterfahren der Transportwagen von dem Schienentransportsystem zum Entladen des Flugzeugs über eine Weiche für das Entladen des Flugzeugs, wobei das Beladen und Entladen des Flugzeugs gleichzeitig durchgeführt werden können,

23. Verfahren nach Anspruch 22, **dadurch gekennzeichnet, dass** mehrere Schienentransportsysteme innerhalb des Lkw-Hubwagenkoffers aufgebaut werden, mit deren Hilfe die Transportwagen innerhalb des Lkw-Hubwagenkoffers transportiert werden können.

24. Verfahren nach Anspruch 22, **dadurch gekennzeichnet, dass** das Schienentransportsystem bei der Vorlaufbeladung aus Produktions-Kommissioniert- und Bereitstellungsbereichen in den Lkw-Hubwagenkoffer verwendet wird.

25. System zum gleichzeitigen Be- und/oder Entladen der Kombüse eines Flugzeuges, die mehrere Schienentransportsysteme nach Anspruch 1 beinhaltet, **dadurch gekennzeichnet, dass** das System mindestens die folgenden Komponenten aufweist:
- einen Lkw-Hubwagenkoffer (83), in dem mehrere Transportwagen (93) vorhanden sind, wobei die Transportwagen (93) jeweils mit Behältnissen beladen sind,
- zwei Schienentransportsysteme (86) zwischen dem Lkw-Hubwagenkoffer (83) und der Flugzeugkabine (89), wobei die zwei Schienentransportsysteme jeweils aus zwei Formprofil-Laufschienen (20) und einer Transportschiene (61) bestehen, und wobei jedes Schienentransportsystem mit einer Weiche (84, 85) für das Herauffahren und das Herunterfahren der Transportwagen versehen ist,
- mehrere Schienentransportsysteme innerhalb des Lkw-Hubwagenkoffers (83) zum Transport der Transportwagen (93) innerhalb des Lkw-Hubwagenkoffers (83).

## Claims

1. A rail transport system comprising at least the following components:
- two shaped-profile running rails (20) that are extended on a staircase or on a flat track, wherein each of the shaped-profile running rails comprises several foldable track cassettes or telescopic rail sections, and the two shaped-profile running rails (20) comprise at least one electric motor (57);
- a transport rail (61) that comprises at least one further electric motor and several foldable rail cassettes (25) or telescopic rail sections; and
- a transport trolley (2) that is moved on the transport rail (61) and in which the shaped-profile running rails (20) and the transport rail (61) are stored when not in use, wherein the transport trolley (2) comprises at least one further electric motor.

2. The rail transport system according to claim 1, **characterised in that**
- between the two shaped-profile running rails (20) several connecting bars (23) are provided, wherein in each case the connecting bars (23) in the middle comprise at least one L-shaped angle piece (24) which during setting-up of the shaped-profile running rails (20) fits closely against the step edges;
- in each case a toothed rack (18) is located at the bottom of the two shaped-profile running rails; and
- under the toothed rack (18) toothed wheels (60) rotate that are affixed in the transport trolley (2), are driven by the electric motor (57) and are connected to a toothed belt (58) by means of which the two shaped-profile running rails (20) are moved upwards to the edge of the stairs at an angle that is greater than the gradient angle of the staircase, and at the end of the setting-up process rest against the staircase.

3. The rail transport system according to claim 1 or 2, **characterised in that** several lateral staircase spacers are attached to the shaped-profile running rails (20).

4. The rail transport system according to any one of claims 1 to 3, **characterised in that** the shaped-profile running rails (20) are U-shaped running rails.

5. The rail transport system according to any one of claims 1 to 4, **characterised in that** laterally on the rail cassettes (25) or on the rail sections of the transport rail (61) connecting rails are fitted that support folding and unfolding of the rail cassettes (25) or retraction and extension of the rail sections.

6. The rail transport system according to any one of claims 1 to 5, **characterised in that** a ramp (70) is fastened by means of a hinge to the topmost cassette or to the topmost rail section, and the lowermost rail cassette or the lowermost rail section comprises an affixed cross bar.

7. The rail transport system according to any one of claims 1 to 6, **characterised in that** in the rail cassettes (25) or rail sections there are several planes that comprise separation devices made of lightweight plastic panels, wherein
- in the planes of the rail cassettes or rail sections a toothed wheel arrangement, one or several toothed belts (64) and one or several flat motors (63) or tube motors are housed; and
- in the various planes square-profile light metal struts or round struts are installed.

8. The rail transport system according to any one of claims 1 to 7, **characterised in that** the transport rail (61) additionally comprises metal springs, air springs or gas springs on the lower edge of the cassettes or sections that support slow lowering of the transport rail onto the step edges.

9. The rail transport system according to any one of claims 1 to 8, **characterised in that** the individual foldable rail cassettes or telescopic rail sections are moved by means of toothed wheels in the transport carriage underneath the toothed rails that are attached on the underside of the rail cassettes or rail sections.

10. The rail transport system according to any one of claims 1 to 9, **characterised in that** the transport rail (61) on both ends comprises one or several fastening means for fastening the rail to the top landing and the bottom landing.

11. The rail transport system according to any one of claims 1 to 10, **characterised in that** an integrated sliding carriage moves on the transport rail, which sliding carriage comprises at least one sliding plate (74) and a transport plate (73), wherein
- the sliding plate (74) and the transport plate (73) are connected to a hinge (71) and can be folded together;
- underneath the sliding plate (74) there are several running rollers that ensure low friction sliding back and forth in the transport rail; and
- at the end of the entire loading and/or unloading process the sliding carriage automatically moves to the top part of the transport rail.

12. The rail transport system according to claim 11, **characterised in that** the transport plate transports the transport trolley, wherein
- the transport plate (73) is moved at an angle greater than 90° relative to the loading and unloading plane;
- on the left-hand side and on the right-hand side of the transport plate (73) securing rails are affixed that determine the respective angle greater than 90° during the folding-out of the two sliding plates; and
- on the transport plate (73) several T-pins are affixed that lock with the locking mechanism in the transport trolley and thus achieve secure fastening of the transport trolley with containers.

13. The rail transport system according to any one of claims 1 to 12, **characterised in that** the width of the transport rail is narrower than the width of the transport trolley with the underbody.

14. The rail transport system according to any one of claims 1 to 13, **characterised in that** the transport trolley additionally comprises a power cord and a plug that can be plugged into a socket in the aircraft, wherein the power cord with the plug is accommodated in a no-trip rail.

15. The rail transport system according to any one of claims 1 to 14, **characterised in that** the transport trolley comprises an operating lever (6) that can reduce or enlarge the transport trolley (2) to the width of a standard trolley (1).

16. The rail transport system according to any one of claims 1 to 15, **characterised in that** the electric motor in the transport trolley and the electric motor in the transport rail in each case can be operated in the aircraft by means of a rechargeable battery for a power failure or for an unavailable power source.

17. The rail transport system according to any one of claims 1 to 16, **characterised in that** the transport trolley (2) has a crank drive option.

18. The rail transport system according to any one of claims 1 to 17, **characterised in that** a lateral flag in a signal colour is installed on one side of the transport trolley, which lateral flag during the setting-up of the transport rail deploys, thus indicating the walkable part of the staircase adjacent to the transport rail to prevent accidents.

19. The rail transport system according to any one of claims 1 to 18, **characterised in that** in the bottom of the transport trolley there are several planes comprising separation devices, wherein
- in the topmost plane a track structure for the additional locking of the containers comprising wheels is provided, and
- in the lowermost plane there is a locking mechanism for locking the transport trolley and the transport plate of a sliding carriage.

20. The rail transport system according to any one of claims 1 to 19, **characterised in that** on the left-hand side and on the right-hand side of the transport trolley in each case there is a spindle tube with installed spindles (75, 76), wherein on the lower part of the spindles the running rollers of the transport trolley are affixed by means of ball bearings, and on the sides of the transport trolley in the lowermost part of the spindle the spindle tubes are connected to a cross bar.

21. A method of constructing a rail transport system according to claim 1 for transporting one or several containers for the loading and/or unloading of the galley of an aircraft, **characterised in that** the method comprises at least the following steps:
- starting up and positioning a transport trolley (2), in which two shaped-profile running rails (20) and a transport rail (61) are stored, to the lowermost step of a staircase, wherein the transport trolley comprises at least one electric motor, wherein the shaped-profile running rails (20) in each case comprise several foldable rail cassettes or telescopic rail sections and wherein said transport rail (61) comprises at least one electric motor and several folding rail cassettes (25) or telescopic rail sections;
- placing the two shaped-profile running rails (20) on the staircase, wherein the shaped-profile running rails are moved upwards to the edge of the stairs at an angle that is greater than the gradient angle of the staircase, and at the end of the setting-up process rest against the staircase;
- placing the transport rail (61) on the shapedprofiled running rail (20), wherein the running rollers (21), which are attached to the underside of the transport rail (61), move in the shaped-profile running rails (20);
- transporting the container or containers, which are loaded in the transport trolley (2), by means of a sliding carriage that comprises at least one sliding plate (74) and a transport plate (73), wherein the sliding plate (74) and the transport plate (73) are connected to a hinge (71) and can be folded together, wherein the transport plate (73) is slid into a slot at the bottom of the transport trolley and is fastened, and wherein underneath the sliding plate (74) there are several running rollers that ensure low friction sliding back and forth in the transport rail (61).

22. The method according to claim 21, **characterised in that** in addition the method comprises at least the following steps:
- arranging several transport trolleys, which are loaded with containers, in a truck case;
- placing four shaped-profile running rails and two transport rails between the truck case and the aircraft, as a result of which two rail transport systems for loading or unloading an aircraft are constructed;
- driving the transport trolley up on the rail transport system for loading the aircraft by way of a track switch for loading the aircraft;
- driving the transport trolley down from the rail transport system for unloading the aircraft by way of a track switch for unloading the aircraft, wherein loading and unloading the aircraft can be carried out simultaneously.

23. The method according to claim 22, **characterised in that** several rail transport systems are set up within the truck case, by means of which rail transport systems the transport trolleys can be transported within the truck case.

24. The method according to claim 22, **characterised in that** the rail transport system is used during upfront loading from the regions of production, commissioning and provisioning to the truck case.

25. The system for concurrently loading and or unloading the galley of an aircraft, which galley comprises several rail transport systems according to claim 1, **characterised in that** the system comprises at least the following components:
- a truck case (83) in which there are several transport trolleys (93), wherein each transport trolley (93) is loaded with containers;
- two rail transport systems (86) between the truck case (83) and the aircraft cabin (89), wherein the two rail transport systems in each case comprise two shaped-profile running rails (20) and a transport rail (61), and wherein each rail transport system comprises a switch (84, 85) for driving up and driving down the transport trolleys;
- several rail transport systems within the truck case (83) for transporting the transport trolley (93) within the truck case (83).

## Revendications

1. Système de transport sur rails comprenant au moins les composantes suivantes :
- deux rails de roulement à profilé moulé (20) qui sont sortis sur un escalier ou un parcours plat, sachant que les rails de roulement à profilé moulé présentent respectivement plusieurs cassettes de rail pliables ou tronçons de rail télescopiques et les deux rails de roulement à profilé moulé (20) présentent au moins un moteur électrique (57),
- un rail de transport (61) qui présente au moins un moteur électrique supplémentaire et plusieurs cassettes de rail pliables (25) ou tronçons de rail télescopiques, et
- un chariot de transport (2) qui est déplacé sur le rail de transport (61) et dans lequel les rails de roulement à profilé moulé (20) et le rail de transport (61) sont stockés lorsqu'ils ne sont pas utilisés, sachant que le chariot de transport (2) est doté au moins d'un moteur électrique supplémentaire.

2. Système de transport sur rails selon la revendication 1, **caractérisé en ce que**
- plusieurs tiges de liaison (23) sont prévues entre les deux rails de roulement à profilé moulé (20), sachant que les tiges de liaison (23) sont respectivement dotées d'au moins un angle en L (24) au centre qui repose sur les bords de l'escalier lors du montage des rails de roulement à profilé moulé (20),
- une crémaillère (18) respective se trouve sur la sous-face des deux rails de roulement à profilé moulé, et
- des roues dentées (60) qui sont placées dans le chariot de transport (2), entraînées par le moteur électrique (57) et reliées à une courroie crantée (58) tournent sous la crémaillère (18), avec lesquelles les deux rails de roulement à profilé moulé (20) sont déplacés vers le haut sur le bord de l'escalier, dans un angle supérieur à l'angle d'inclinaison de l'escalier, et se placent sur l'escalier à la fin du processus de montage.

3. Système de transport sur rails selon la revendication 1 ou 2, **caractérisé en ce que** plusieurs écarteurs de côté d'escalier sont disposés sur les rails de roulement à profilé moulé (20).

4. Système de transport sur rails selon l'une des revendications 1 à 3, **caractérisé en ce que** les rails de roulement à profilé moulé (20) sont des rails de roulement en U.

5. Système de transport sur rails selon l'une des revendications 1 à 4, **caractérisé en ce que** des rails de liaison sont disposés latéralement sur les cassettes de rail (25) ou les tronçons de rail du rail de transport (61), qui soutiennent le pliage et dépliage des cassettes de rail (25) ou la rentrée et la sortie des tronçons de rail.

6. Système de transport sur rails selon l'une des revendications 1 à 5, **caractérisé en ce qu'**une rampe (70) est fixée au moyen de charnières sur la cassette supérieure ou sur le tronçon de rail supérieur et la cassette de rail la plus basse ou le tronçon de rail le plus bas est doté(e) d'une barre transversale posée.

7. Système de transport sur rails selon l'une des revendications 1 à 6, **caractérisé en ce qu'**il y a plusieurs niveaux dans les cassettes de rail (25) ou les tronçons de rail, qui sont dotés de séparations en plaques de plastique légères, sachant que
- une technique de roue dentée, une ou plusieurs courroie(s) crantée(s) (64) et un ou plusieurs moteur(s) à plat (63) ou moteur(s) tubulaires sont disposé(e)s dans les niveaux des cassettes de rail ou des tronçons de rail, et
- des contre-fiches carrées en métal léger ou des contre-fiches à tige ronde sont intégrées dans les différents niveaux.

8. Système de transport sur rails selon l'une des revendications 1 à 7, **caractérisé en ce que** le rail de transport (61) est doté en outre de ressorts métalliques, de ressorts pneumatiques ou de ressorts à gaz sur le bord inférieur des cassettes, respectivement des tronçons qui favorisent un abaissement lent du rail de transport sur les bords de l'escalier.

9. Système de transport sur rails selon l'une des revendications 1 à 8, **caractérisé en ce que** les différent(e)s cassettes de rail pliables, respectivement tronçons de rail télescopiques sont déplacé(e)s au moyen de roues dentées dans le chariot de transport sous les crémaillères, qui sont placées sur la sous-face des cassettes de rail, respectivement, des tronçons de rail.

10. Système de transport sur rails selon l'une des revendications 1 à 9, **caractérisé en ce que** le rail de transport (61) est doté aux deux extrémités respectivement d'un ou plusieurs moyen(s) de fixation pour fixer le rail sur le palier de marche supérieur et le palier de marche inférieur.

11. Système de transport sur rails selon l'une des revendications 1 à 10, **caractérisé en ce qu'**un chariot coulissant intégré se déplace sur le rail de transport, lequel possède au moins une plaque coulissante (74) et une plaque de transport (73), sachant que
- la plaque coulissante (74) et la plaque de transport (73) sont reliées par une charnière (71) et peuvent être rabattues ensemble,
- plusieurs rouleaux de roulement reposent sous la plaque coulissante (74), lesquels assurent un coulissement d'avant en arrière sans friction dans le rail de transport et
- le chariot coulissant se déplace automatiquement sur la partie supérieure du rail de transport à la fin de la totalité de la procédure de chargement et/ou de déchargement.

12. Rail de transport selon la revendication 11, **caractérisé en ce que** la plaque de transport transporte le chariot de transport, sachant que
- la plaque de transport (73) est déplacée vers le niveau de chargement et de déchargement dans un angle supérieur à 90°,
- des rails de sécurité sont disposés à droite et à gauche de la plaque de transport (73), lesquels déterminent l'angle respectif supérieur à 90° lorsque les deux plaques coulissantes sont dépliées et
- plusieurs tiges en T sont disposées sur la plaque de transport (73), lesquelles se ferment dans le chariot de transport avec la technique de verrouillage et réalisent ainsi une fixation sûre du chariot de transport avec des récipients.

13. Système de transport sur rails selon l'une des revendications 1 à 12, **caractérisé en ce que** la largeur du rail de transport est inférieure à la largeur du chariot de transport avec bâti.

14. Système de transport sur rails selon l'une des revendications 1 à 13, **caractérisé en ce que** le chariot de transport est doté en outre d'un câble électrique et d'une fiche, qui peuvent être raccordés à une prise de courant dans l'avion, sachant que le câble électrique avec la fiche est disposé dans un rail sans soubresauts.

15. Système de transport sur rails selon l'une des revendications 1 à 14, **caractérisé en ce que** le chariot de transport est doté d'un levier de roulement (6) qui peut rétrécir ou agrandir le chariot de transport (2) à la largeur d'un chariot de service standard (1).

16. Système de transport sur rails selon l'une des revendications 1 à 15, **caractérisé en ce que** le moteur électrique dans le chariot de transport ainsi que le moteur électrique dans le rail de transport peuvent être entraînés respectivement avec une batterie pour les pannes de courant ou une source de courant non disponible dans l'avion.

17. Système de transport sur rails selon l'une des revendications 1 à 16, **caractérisé en ce que** le chariot de transport (2) dispose d'une possibilité d'entraînement à manivelle.

18. Système de transport sur rails selon l'une des revendications 1 à 17, **caractérisé en ce qu'**un drapeau latéral dans une couleur de signal est intégré dans un côté du chariot de transport, qui est monté conjointement lors du montage du rail de transport et qui indique la partie praticable de l'escalier à côté du rail de transport pour éviter un risque d'accident.

19. Système de transport sur rails selon l'une des revendications 1 à 18, **caractérisé en ce que** plusieurs niveaux avec une séparation se trouvent dans le fond du chariot de transport, sachant que
- une construction de voie de roulement est prévue dans le niveau le plus élevé pour le blocage supplémentaire des récipients avec des roues, et
- une technique de verrouillage pour le chariot de transport et la plaque de transport d'un chariot coulissant se trouve dans le niveau le plus bas.

20. Système de transport sur rails selon l'une des revendications 1 à 19, **caractérisé en ce qu'**un tubes à broches avec des broches intégrées (75, 76) se trouve à droite et à gauche du chariot de transport, sachant que les rouleaux de roulement du chariot de transport sont placés avec des paliers à billes sur la partie inférieure des broches et les tubes à broches sur les côtés du chariot de transport sont reliés par une barre transversale sur la partie la plus inférieure des broches.

21. Procédé destiné au montage d'un système de transport sur rails selon la revendication 1 et au transport d'un ou plusieurs récipients pour le chargement et/ou le déchargement du bloc-cuisine d'un avion, **caractérisé en ce que** le procédé comprend au moins les étapes suivantes :
- approche et positionnement d'un chariot de transport (2), dans lequel deux rails de roulement à profilé moulé (20) et un rail de transport (61) sont disposés, sur la marche la plus basse d'un escalier, sachant que le chariot de transport est doté d'au moins un moteur électrique, sachant que les rails de roulement à profilé moulé (20) présentent respectivement plusieurs cassettes de rail pliables ou tronçons de rail télescopiques et sachant que le rail de transport (61) présente au moins un moteur électrique et plusieurs cassettes de rail pliables (25) ou tronçons de rail télescopiques,
- placement des deux rails de roulement à profilé moulé (20) sur l'escalier, sachant que les rails de roulement à profilé moulé sont déplacés vers le haut sur le bord de l'escalier, dans un angle supérieur à l'angle d'inclinaison de l'escalier, et reposent sur l'escalier à la fin du processus de montage,
- placement du rail de transport (61) sur le rail de roulement à profilé moulé (20), sachant que les rouleaux de roulement (21) qui sont disposés sur la sous-face du rail de transport (61), se déplacent dans les rails de roulement à profilé moulé (20),
- transport du, respectivement des récipient(s) qui est/sont chargé(s) dans le chariot de transport (2) au moyen d'un chariot coulissant qui possède au moins une plaque coulissante (74) et une plaque de transport (73), sachant que la plaque coulissante (74) et la plaque de transport (73) sont reliées par une charnière (71) et peuvent être pliées ensemble, sachant que la plaque de transport (73) est poussée et fixée dans une encoche dans le bas du chariot de transport et sachant que plusieurs rouleaux de roulement reposent sous la plaque coulissante (74), lesquels assurent un coulissement d'avant en arrière sans friction dans le rail de transport (61).

22. Procédé selon la revendication 21, **caractérisé en ce que** le procédé comprend en outre au moins les étapes suivantes :
- agencement de plusieurs chariots de transport qui sont chargés de récipients, dans un coffre de camion à chariot élévateur,
- placement de quatre rails de roulement à profilé moulé et de deux rails de transport entre le coffre de camion à chariot élévateur et l'avion, par lequel deux systèmes de transport sur rails sont montés pour le chargement, respectivement le déchargement d'un avion,
- levage du chariot de transport sur le système de transport sur rails pour charger l'avion via un aiguillage pour le chargement de l'avion,
- abaissement du chariot de transport du système de transport sur rails pour décharger l'avion via un aiguillage pour le déchargement de l'avion, sachant que le chargement et le déchargement de l'avion peuvent être effectués simultanément.

23. Procédé selon la revendication 22, **caractérisé en ce que** plusieurs systèmes de transport sur rails sont montés à l'intérieur du coffre de camion à chariot élévateur à l'aide desquels les chariots de transport peuvent être transportés à l'intérieur du coffre de camion à chariot élévateur.

24. Procédé selon la revendication 22, **caractérisé en ce que** le système de transport sur rails est employé lors du chargement préalable dans le coffre de camion à chariot élévateur, venant de services de production, de mise en service et de préparation.

25. Système pour le chargement et/ou déchargement simultané d'un bloc-cuisine d'un avion, qui comporte plusieurs systèmes de transport sur rails selon la revendication 1, **caractérisé en ce que** le système présente au moins les composantes suivantes :
- un coffre de camion à chariot élévateur (83) dans lequel plusieurs chariots de transport (93) sont présents, sachant que les chariots de transport (93) sont respectivement chargés de récipients,
- deux systèmes de transport sur rails (86) entre le coffre de camion à chariot élévateur (83) et la cabine de l'avion (89), sachant que les deux systèmes de transport sur rails sont composés respectivement de deux rails de roulement à profilé moulé (20) et d'un rail de transport (61), et sachant que chaque système de transport sur rails est doté d'un aiguillage (84, 85) pour le levage et l'abaissement des chariots de transport,
- plusieurs systèmes de transport sur rails à l'intérieur du coffre de camion à chariot élévateur (83) pour transporter le chariot de transport (93) à l'intérieur du coffre de camion à chariot élévateur (83).
